# EUROPÄISCHE PATENTSCHRIFT

(11) **EP 3 738 197 B1**
(45) Veröffentlichungstag und Bekanntmachung des Hinweises auf die Patenterteilung: **26.08.2026**
(21) Anmeldenummer: 18826500.3
(22) Anmeldetag: 12.12.2018
(51) Int. Cl.: H02K 7/102, H02K 5/20, H02K 9/06

(54) **ANTRIEB, AUFWEISEND EINEN ELEKTROMOTOR MIT BREMSE, LÜFTERHAUBE UND STANGE ZUM MANUELLEN BETÄTIGEN DER BREMSE UND VERFAHREN ZUM HERSTELLEN EINES ANTRIEBS**
DRIVE COMPRISING AN ELECTRIC MOTOR WITH A BRAKE, A FAN COWL, AND A ROD FOR MANUALLY ACTUATING THE BRAKE, AND PROCESS FOR MANUFACTURING A DRIVE
MÉCANISME D'ENTRAÎNEMENT PRÉSENTANT UN MOTEUR ÉLECTRIQUE DOTÉ D'UN FREIN, CAPOT DE VENTILATEUR ET TRINGLE POUR ACTIONNER MANUELLEMENT LE FREIN ET PROCÉDÉ DE FABRICATION D'UN MÉCANISME D'ENTRAÎNEMENT

(30) Priorität: 12.01.2018 DE 102018000180
(43) Veröffentlichungstag der Anmeldung: 18.11.2020
(73) Patentinhaber: SEW-EURODRIVE GmbH & Co. KG, 76646 Bruchsal (DE)
(72) Erfinder: ESSERT, Steffen, 76646 Bruchsal (DE); LUTZ, Andreas, 76287 Rheinstetten (DE)
(86) Internationale Anmeldenummer: PCT/EP2018/025318
(87) Internationale Veröffentlichungsnummer: WO 2019/137599

(56) Entgegenhaltungen:
- DE-A1- 102010 049 748
- DE-A1- 102012 019 415
- DE-B- 1 026 407
- DE-B- 1 130 514
- DE-U1- 20 218 026
- GB-A- 965 187
- US-A- 3 045 782
- US-A- 6 125 975
- US-B1- 6 781 264
- US-B1- 7 100 747

## Beschreibung

Die Erfindung betrifft einen Antrieb, aufweisend einen Elektromotor mit Bremse, Lüfterhaube und Stange zum manuellen Betätigen der Bremse und ein Verfahren zum Herstellen eines Antriebs.

**Aus der** EP 2 493 058 A1 **ist bekannt, dass eine Lüfterhaube einen Lüfter zumindest teilweise umgibt.**

**Aus der** DE 202 18 026 U1 **ist eine Vorrichtung zur Handlüftung einer Federkraftbremse an einem elektrischen Bremsmotor bekannt.**

**Aus der** DE 102 38 336 A1 **ist eine Motorreihe bekannt.**

**Aus der** DE 10 2008 028 604 A1 **ist ein Elektromotor mit elektromagnetisch betätigbarer Bremse bekannt.**

**Aus der** JP H11 - 127 554 A **ist eine elektromagnetische Bremse bekannt.**

**Aus der** DE 20 2004 015 271 U1 **ist eine elektrische Antriebseinheit für Fahrzeuge bekannt.**

**Aus der** DE 10 2012 205 710 A1 **ist ein Statorsegment einer elektrischen Maschine bekannt.**

**Aus der** DE 10 2008 025 432 A1 **ist ein Klemmenanschlussblock bekannt.**

**Aus der** WO 2016/083398 A1 **ist ein Herstellverfahrensschritt für ein Automobilteil bekannt.**

**Aus der** GB 965 187 A **ist als nächstliegender Stand der Technik ein Antrieb bekannt.**

**Aus der** US 3 045 782 A **ist eine elektromagnetische Bremse bekannt.**

**Aus der** DE 11 30 514 B **ist ein Elektromotor mit mechanisch wirkender Bremse bekannt.**

**Aus der** US 7 100 747 B1 **ist ein Motor mit integrierter Bremse mit Handbetätigung bekannt.**

**Aus der** DE 10 2010 049 748 A1 **ist ein Elektromotor mit Bremse bekannt.**

**Aus der** DE 1 026 407 A **ist ein Elektromotor mit einem umlaufenden Anker und einer elektromagnetischen Bremsvorrichtung bekannt.**

**Aus der** DE 10 2012 019 415 A1 **ist ein Elektromotor mit einer redundanten Bremsanordnung bekannt.**

**Aus der** DE 202 18 026 U1 **ist eine Vorrichtung zur Handlüftung einer Federkraftbremse an einem elektrischen Bremsmotor bekannt.**

Der Erfindung liegt daher die Aufgabe zugrunde, einen Antrieb weiterzubilden, wobei eine erhöhte Sicherheit erreichbar ist.

Erfindungsgemäß wird die Aufgabe bei dem Antrieb nach den in Anspruch 1 und bei dem Verfahren nach den in Anspruch 15 angegebenen Merkmalen gelöst.

**Wichtige Merkmale der Erfindung bei dem Antrieb sind, dass der Antrieb einen Antrieb, aufweisend einen Elektromotor mit Bremse, einen Lüfter und eine Lüfterhaube,**
**wobei die Lüfterhaube den Lüfter abdeckt und mit einem Gehäuseteil, insbesondere mit einem Statorgehäuseteil, des Elektromotors lösbar verbunden ist,**
**wobei eine Stange durch ein Verschlussteil hindurchführbar ist, welches durch eine in der Lüfterhaube angeordneten Ausnehmung, insbesondere eine als Schlitz ausgeführte Ausnehmung, hindurchragt,**
**wobei die Stange bewegbar an der Bremse angeordnet ist und die Stange, insbesondere die als Hebelteil ausgeführte Stange, zum manuellen Betätigen, insbesondere Lüften, der Bremse vorgesehen ist,**
**wobei das Verschlussteil zur Lüfterhaube relativ bewegbar angeordnet ist.**

**Bei der Erfindung bei dem Antrieb ist also vorgesehen, dass der Antrieb einen Elektromotor mit Bremse und eine Lüfterhaube aufweist, wobei die Lüfterhaube mit einem Gehäuseteil, insbesondere mit einem Statorgehäuseteil des Elektromotors, lösbar verbunden ist,**
**wobei eine Stange durch ein Verschlussteil hindurchführbar ist, welches durch eine in der Lüfterhaube angeordneten Ausnehmung, insbesondere eine als Schlitz ausgeführte Ausnehmung, hindurchragt,**
**insbesondere wobei die Stange bewegbar, insbesondere schwenkbar, an der Bremse angeordnet ist und die Stange, insbesondere die als Hebelteil ausgeführte Stange, zum manuellen Betätigen, insbesondere Lüften, der Bremse vorgesehen ist**

Von Vorteil ist dabei, dass ein Durchgreifen mit einem Finger verhindert ist, da das Verschlussteil den freien Bereich des Schlitzes der Lüfterhaube verschließt. Trotzdem ist die Stange bewegbar. Denn das Verschlussteil ist geführt bewegbar an der Lüfterhaube. Hierzu ist eine Einklipsverbindung verwendet, welche in axialer Richtung frei ist. Die Einklipsverbindung ist also nur in radialer und in Umfangsrichtung realisiert.

Die genannten Richtungen beziehen sich auf die Drehachse des Rotors des Motors.

Das Verschlussteil ist aus einem weicheren Material ausführbar als die Lüfterhaube. Vorzugsweise ist die Lüfterhaube aus einem Metallblech ausführbar und das Verschlussteil aus Gummi oder einem Kunststoff.

Somit ist eine erhöhte Sicherheit erreichbar.

**Erfindungsgemäß ist das Verschlussteil zur Lüfterhaube relativ bewegbar angeordnet,**

**insbesondere das Verschlussteil zusammen mit der Stange bei deren Schwenkbewegung hin- und herbewegbar ist. Von Vorteil sind dabei die verbesserte Abdichtung und erhöhte Sicherheit gegen Berührung beweglicher Teile.**

Bei einer vorteilhaften Ausgestaltung ist das Verschlussteil eingeklipst in die Lüfterhaube, insbesondere in den Schlitz der Lüfterhaube. Von Vorteil ist dabei, dass eine einfache Verbindungstechnik anwendbar ist. Außerdem ist die Zuführung des Verschlussteils beim Einklipsen aus radialer Richtung her ausführbar. In axialer Richtung wirkt die Einklipsverbindung nicht und es ist sogar ein niedriger Reibungskoeffizient für die zur Lüfterhaube relative axiale Verschiebung des Einschiebeteils realisiert.

Durch die Verwendung von Gummi als Material für das Verschlussteil ist eine hohe Dichtigkeit im Berührbereich zwischen Verschlussteil und Lüfterhaube erreicht.

**Erfindungsgemäß** weist das Verschlussteil einen plattenförmigen Bereich und einen mit dem plattenförmigen Bereich verbundenen Führungsbereich auf, an welchem in Umfangsrichtung voneinander beabstandete erste Nutabschnitte ausgebildet sind, in welche die Lüfterhaube, insbesondere ein jeweiliger Randbereich des Schlitzes der Lüfterhaube, hineinragt. Von Vorteil ist dabei, dass der Führungsbereich das Verschlussteil am Randbereich des Schlitzes der Lüfterhaube führt, insbesondere bei Bewegung entlang des Schlitzes, also in axialer Richtung. Der plattenförmige Bereich dient zum Abdecken des Schlitzes und dichtet dabei zwischen Lüfterhaube und Verschlussteil ab.

**Bei einer vorteilhaften Ausgestaltung ist der von der Ausnehmung in axialer Richtung überdeckte Bereich größer als der vom Führungsbereich überdeckte Bereich,**
**wobei der vom plattenförmigen Bereich in axialer Richtung überdeckte Bereich größer ist als der von der Ausnehmung überdeckte Bereich. Von Vorteil ist dabei, dass die Ausnehmung nach außen hin abgedeckt ist.**

Bei einer vorteilhaften Ausgestaltung sind am Führungsbereich zweite Nutabschnitte ausgebildet, welche von den ersten Nutabschnitten in axialer Richtung beabstandet sind. Von Vorteil ist dabei, dass eine stabile Führung ausführbar ist.

Bei einer vorteilhaften Ausgestaltung weist jeder der Nutabschnitte zwei, in Umfangsrichtung voneinander beabstandete Vertiefungen auf. Von Vorteil ist dabei, dass das Verschlussteil für unterschiedlich dickwandige Lüfterhauben verwendbar ist. Denn somit ist eine erste Lüfterhaube, welche dünnwandiger ist als eine zweite Lüfterhaube, in eine erste der Vertiefungen einklipsbar und liegt dann am plattenförmigen Bereich an, und alternativ ist die zweite Lüfterhaube einklipsbar, wobei diese dann beide Vertiefungen ausfüllt und somit stabil im Nutabschnitt aufgenommen ist. Insbesondere liegt dann die Lüfterhaube radial beidseitig an dem Verschlussteil an.

Bei einer vorteilhaften Ausgestaltung weist die dem plattenförmigen Bereich zugewandte Vertiefung des jeweiligen Nutbereiches eine Einführschräge, insbesondere eine zum plattenförmigen Bereich hin gerichtete Einführschräge, auf. Von Vorteil ist dabei, dass die erste Lüfterhaube, insbesondere also die dünnwandigere Lüfterhaube, zum plattenförmigen Bereich hingeführt wird und somit für das Einpressen nur ein geringer Kraftaufwand notwendig ist. Außerdem ist die relative Position des Verschlussteils zur Lüfterhaube 2

Bei einer vorteilhaften Ausgestaltung ist die Lüfterhaube in der dem plattenförmigen Bereich zugewandten Vertiefung des jeweiligen Nutbereiches angeordnet
und/oder die Lüfterhaube liegt an einem radial inneren Oberflächenbereich des plattenförmigen Bereichs an,
wobei die andere Vertiefung des jeweiligen Nutbereichs von der Lüfterhaube beabstandet ist. Von Vorteil ist dabei, dass eine Zentrierung der Lüfterhaube zum Verschlussteil ausgeführt ist und somit ein definiertes Anliegen des plattenförmigen Bereichs an der Lüfterhaube zur Herstellung einer dichten Verbindung erreichbar ist.

Bei einer vorteilhaften Ausgestaltung ragt der Führungsbereich des Verschlussteils durch den in der Lüfterhaube angeordneten Schlitz hindurch
und/oder der plattenförmige Bereich liegt auf dem radial äußeren Oberflächenbereich des Verschlussteils auf. Von Vorteil ist dabei, dass eine formschlüssige Sicherung des Verschlussteils an der Lüfterhaube ausgeführt ist. Außerdem ist mittels des plattenförmigen Bereichs eine Abdichtung hin zur Lüfterhaube erreichbar.

Bei einer vorteilhaften Ausgestaltung ist im Verschlussteil eine Vertiefung angeordnet, in welcher insbesondere mittig eine durch das Verschlussteil radial durchgehende Ausnehmung angeordnet ist. Von Vorteil ist dabei, dass die Stange durch die Vertiefung durchführbar ist, wobei aber der Durchmesser der Stange größer ist als der lichte Durchmesser der durchgehenden Ausnehmung.

Bei einer vorteilhaften Ausgestaltung sind innerhalb der Vertiefung Laschenbereiche angeordnet, welche mit dem Verschlussteil, insbesondere mit dem Führungsbereich des Verschlussteils, einstückig, insbesondere einteilig, ausgeformt sind. Von Vorteil ist dabei, dass ein Durchgreifen eines menschlichen Fingers durch die durchgehende Ausnehmung verhindert ist, da diese zu eng ist, und ein Durchgreifen eines menschlichen Fingers durch die Laschenbereiche verhindert ist, weil ein Schwellwert an Kraftbetrag überschritten ist und somit dieser Kraftbetrag von einem menschlichen Finger nicht aufbringbar ist.

Da die Stange beim Betätigen der manuellen Handlüftung der Bremse nicht einfach nur in axialer verschoben wird, sondern geschwenkt wird um einen Drehpunkt, welcher an der Bremse angeordnet ist, werden die Laschenbereiche während der Schwenkbewegung immer weiter ausgelenkt und bei der Rückdrehung entsprechend immer weniger.

Bei einer vorteilhaften Ausgestaltung sind die Laschenbereiche elastisch ausgelenkt und/oder drücken elastisch gespannt gegen die Stange. Von Vorteil ist dabei, dass das Verschlussteil kraftschlüssig verbunden ist mit der Stange. Insbesondere ist die Verbindung derart, dass bei Verschiebung der Stange in axialer Richtung das Verschlussteil mitgenommen wird, wobei es in den Nutabschnitten des Führungsbereichs geführt ist.

Bei einer vorteilhaften Ausgestaltung sind die Laschenbereiche voneinander regelmäßig beabstandet, insbesondere mittels Schlitzen. Von Vorteil ist dabei, dass eine einfache Herstellung ermöglicht ist und die Stange mit geringem Kraftaufwand durchführbar durch die Vertiefung ist. Insbesondere ist eine Anzahl von drei oder mehr Laschenbereichen vorteilhaft, da somit ein Wölben des Verschlussteils oder Verspannungen des Verschlussteils vermeidbar sind.

Bei einer vorteilhaften Ausgestaltung ist die Vertiefung zylindrisch ausgeformt,
wobei die Laschenbereiche in Umfangsrichtung um die Zylinderachse der Vertiefung jeweils denselben Umfangswinkelbetrag überdecken und regelmäßig voneinander beabstandet sind,
wobei die Laschenbereiche jeweils denselben, auf die Zylinderachse bezogenen Radialabstandsbereich überdecken und
wobei die Laschenbereiche jeweils denselben axialen Bereich überdecken,

insbesondere wobei bezogen auf die Zylinderachse in Umfangsrichtung zwischen den Laschenbereichen jeweils ein Schlitz ausgeführt ist, welcher sich vom Führungsbereich nach bezogen auf die Zylinderachse radial bis zur durchgehenden Ausnehmung erstreckt. Von Vorteil ist dabei, dass somit am Boden der Vertiefung ein Kreuzschlitz ausbildbar ist und daher die Stange mit geringem Kraftaufwand durchführbar ist. Darüber hinaus ist bei der geringen Anzahl von Laschenbereichen, insbesondere vier Laschenbereichen, eine genügend große Anpresskraft der Laschenbereiche gegen die Stange erreichbar.

Bei einer vorteilhaften Ausgestaltung ist der zum Erreichen der elastischen Auslenkung der Laschenbereiche notwendige, insbesondere durch die Stange beim Durchstoßen der Vertiefung aufzubringende Kraftbetrag größer als der von einem Prüffinger gemäß Norm maximal aufbringbare Kraftbetrag. Von Vorteil ist dabei, dass eine erhöhte Sicherheit mit wenig Aufwand erreichbar ist.

Bei einer vorteilhaften Ausgestaltung ist die durchgehende Ausnehmung bezogen auf die Zylinderachse radial innerhalb des von den Laschenbereichen überdeckten Radialabstandsbereich angeordnet. Von Vorteil ist dabei, dass die Stange nach Durchführen durch die Vertiefung, insbesondere durchgehende Ausnehmung, mittig in der Vertiefung angeordnet ist.

Wichtige Merkmale bei dem Verfahren zum Herstellen eines Antriebs sind, dass der Antrieb einen Elektromotor mit Bremse, Lüfterhaube und Stange, insbesondere Hebelteil, zum manuellen Betätigen, insbesondere Lüften, der Bremse aufweist,
wobei die Lüfterhaube mit einem Gehäuseteil, insbesondere mit einem Statorgehäuseteil des Elektromotors, lösbar verbunden wird,
wobei die Stange bewegbar angeordnet ist,
wobei die Stange durch ein Verschlussteil hindurchgeführt wird, welches durch einen in der Lüfterhaube angeordneten Schlitz hindurchragt,
wobei als Lüfterhaube wahlweise eine erste oder zweite Lüfterhaube verwendet wird, wobei die Wandstärke der ersten Lüfterhaube kleiner ist als die Wandstärke der zweiten Lüfterhaube,
wobei das Verschlussteil einen Nutabschnitt aufweist, deren Nutweite der Wandstärke der zweiten Lüfterhaube gleicht,

insbesondere wobei der Nutabschnitt zwei radial voneinander beabstandete Vertiefungen aufweist, wobei die erste Lüfterhaube nur in einer der beiden Vertiefungen angeordnet ist, also von der anderen der beiden Vertiefungen beabstandet ist und wobei die zweite Lüfterhaube beide Vertiefungen füllt und/oder überdeckt.

Von Vorteil ist dabei, dass das Verschlussteil für zwei verschieden dicke Lüfterhauben verwendbar ist. Vorteiligerweise ist auch die dünnwandige Lüfterhaube spielfrei haltbar in dem Nutabschnitt, weil dieser Nutabschnitt Vertiefungen aufweist, wobei eine erste dieser Vertiefungen auf die Lüfterhaube abgestimmt ist.

Weitere Vorteile ergeben sich aus den Unteransprüchen.

Die Erfindung wird nun anhand von schematischen Abbildungen näher erläutert:

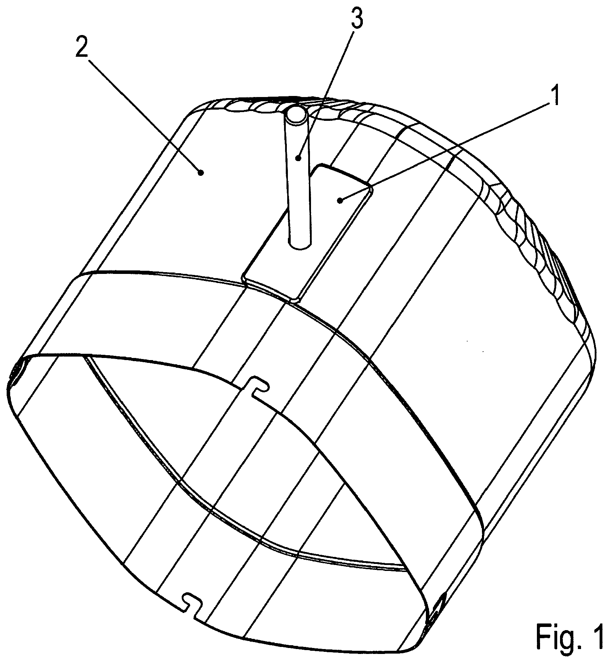

In der Figur 1 ist eine Lüfterhaube 2 mit einem Verschlussteil 1 in einer ersten Blickrichtung in Schrägansicht dargestellt, wobei durch das Verschlussteil 1 eine Stange 3 hindurchgeführt ist.

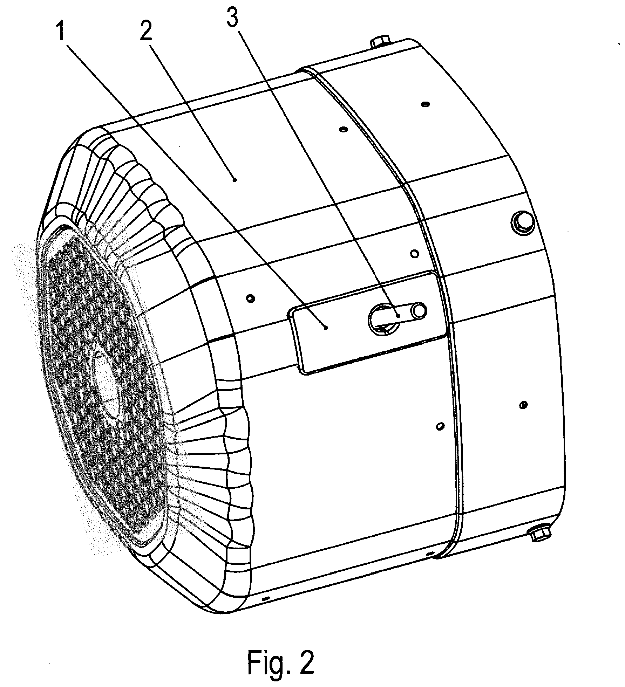

In der Figur 2 ist die Lüfterhaube 2 im Unterschied zu Figur 1 in einer anderen Blickrichtung dargestellt.

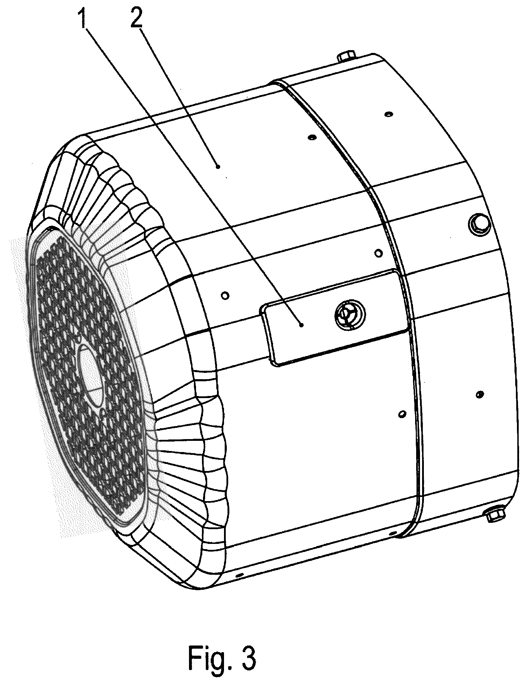

In der Figur 3 ist ebenfalls eine Schrägansicht dargestellt, wobei die Stange 3 nicht vorhanden ist.

In der Figur 4 ist eine Draufsicht auf das Verschlussteil 1 dargestellt.

In der Figur 5 ist ein Querschnitt durch das Verschlussteil 1 dargestellt.

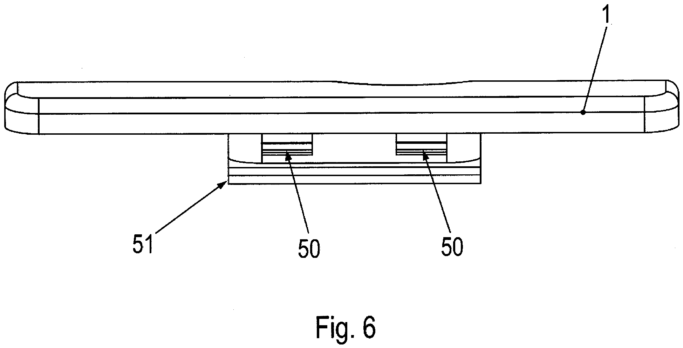

In der Figur 6 ist eine Seitenansicht auf das Verschlussteil 1 dargestellt.

In der Figur 7 ist eine Schrägansicht auf das Verschlussteil dargestellt.

Wie in den Figuren dargestellt, weist die Lüfterhaube 2 eine Ausnehmung auf, welche mittels des Verschlussteils 1 bedeckt ist.

Die Lüfterhaube 2 umgibt einen in den Figuren nicht dargestellten Lüfter, welcher am axialen Endbereich eines Elektromotors angeordnet ist. Der Elektromotor weist ein Statorgehäuse auf, mit welchem die Lüfterhaube lösbar verbunden ist.

Mittels der Lüfterhaube 2 wird der vom Lüfter geförderte Luftstrom auf Austrittsöffnungen gerichtet, aus denen der Luftstrom dann austritt und an der Außenseite des Statorgehäuses entlangströmt. Somit ist eine effektive Kühlung des Motors erreichbar.

Die Lüfterhaube 2 weist an ihrem, vom Motor abgewandten axialen Endbereich ein Gitter mit Gitteröffnungen auf, durch welche der vom Lüfter angesaugte Luftstrom hindurchtritt.

Die axiale Richtung ist parallel zur Drehachse des Rotors des Elektromotors, wobei der Rotor drehbar gelagert zum Statorgehäuse ist.

Außerdem ist eine elektromagnetisch betätigbare Bremse am axialen Endbereich des Motors angeordnet, welche radial umgeben ist von der Lüfterhaube 2.

Zur Handlüftung der Bremse, beispielsweise bei Ausfall des elektrischen Öffentlichen Versorgungsnetzes, ist eine Stange 3 vorgesehen, die von der Umgebung her, also von außerhalb der Lüfterhaube 2 her betätigbar ist.

Zur Verbindung der Stange 3 mit der Bremse wird die Stange 3 durch das Verschlussteil 1 durchgeführt. Hierzu weist das Verschlussteil 1 eine durchgehende Ausnehmung auf.

Nach dem Verbinden mit der Bremse ist die Stange 3 drehbar gelagert, wobei das zugehörige Drehgelenk an der Bremse angeordnet ist. Die Drehachse ist senkrecht zur Drehachse der Rotorwelle ausgerichtet, insbesondere wobei die beiden Drehachsen voneinander beabstandet sind. Die Stange 3 ist bei der Drehbewegung schwenkbar innerhalb einer Ebene, welche die Drehachse der Rotorwelle enthält oder zu dieser parallel ist. Also wird die Stange 3, insbesondere der Schwerpunkt der Stange 3, zum manuellen Lüften der Bremse auch in axialer Richtung hinbewegt und zum Freigeben in axialer Richtung zurückbewegt

Im freigegebenen Zustand ist keine manuelle Lüftung vorhanden, so dass die Betätigung der Bremse elektromagnetisch erfolgt. Bei Bestromen einer Bremsspule der Bremse wird die Bremse gelüftet und bei Ausfall des Bestromens der Bremsspule fällt die Bremse ein.

Das Verschlussteil 1 ist zur Lüfterhaube 2 relativ beweglich angeordnet.

Hierzu ist die Ausnehmung, als Axialschlitz ausgeführt, so dass das Verschlussteil 1 zusammen mit der Stange 3 bei deren Schwenkbewegung hin- und herbewegbar ist.

Die Wandstärke der Lüfterhaube 2 ist im Berührbereich mit dem Verschlussteil 1 konstant.

Das Verschlussteil 1 ist vorzugsweise aus Gummi oder aus einem Kunststoff ausgeführt.

Das Verschlussteil 1 weist einen plattenförmigen Bereich auf, welcher an der Außenseite der Lüfterhaube 2 anliegt und dabei die als Axialschlitz in der Lüfterhaube 2 ausgeführte Ausnehmung überdeckt.

An diesem plattenförmigen Bereich ist ein durch die Ausnehmung hindurch ragender Führungsbereich ausgeformt, welcher seitlich Nutabschnitte 50 aufweist, in welche die Lüfterhaube 2 eingeklipst ist.

Ein erster der Nutabschnitte 50 ist am in Umfangsrichtung vorderen Endbereich des Führungsbereichs angeordnet.

Ein zweiter der Nutabschnitte 50 ist am in Umfangsrichtung hinteren Endbereich des Führungsbereichs angeordnet.

Ein dritter Nutabschnitt 50 ist gleichartig zum ersten der Nutabschnitte 50 ausgeführt und axial von diesem beabstandet, aber an gleicher radialer Position und Umfangswinkelposition.

Ein vierter Nutabschnitt 50 ist gleichartig zum zweiten der Nutabschnitte 50 ausgeführt und axial von diesem beabstandet, aber an gleicher radialer Position und Umfangswinkelposition.

Somit sind die Nutabschnitte 50 an dem in Umfangsrichtung vorderen Endbereich voneinander axial beabstandet.

Ebenso sind die Nutabschnitte 50 an dem in Umfangsrichtung hinteren Endbereich voneinander axial beabstandet.

Der vom Führungsbereich axial überdeckte Bereich umfasst auch die von den Nutabschnitten 50 axial überdeckten Bereiche.

Der vom ersten Nutabschnitt 50 überdeckte Umfangswinkelbereich ist vom vom zweiten Nutabschnitt 50 überdeckten Umfangswinkelbereich in Umfangsrichtung beabstandet.

Jeder der Nutabschnitte 50 weist zwei in radialer Richtung nebeneinander angeordnete Vertiefungen auf, die sich jeweils in axialer Richtung erstrecken.

Dabei das Verschlussteil 1 radial derart tief in den Axialschlitz der Lüfterhaube hineingedrückt, dass die Lüfterhaube an der in radialer Richtung weiter außen angeordneten Vertiefung eingeklipst wird. Somit liegt dann die Lüfterhaube 2 an der radial äußeren Nutwand des jeweiligen Nutabschnitts 50 an. Die Lüfterhaube ist also in der radial äußeren der beiden Vertiefungen gehalten, indem die Lüfterhaube, in der radial äußeren der beiden Vertiefungen angeordnet ist.

Vorzugsweise wird die Lüfterhaube 2 aus Stahlblech ausgeführt.

Vorteiligerweise ist das Verschlussteil 1 aber auch für Lüfterhauben mit einer größeren Wandstärke verwendbar. Dabei sind Wandstärken zulässig, welche der maximalen radialen Ausdehnung der beiden Vertiefungen entsprechen. In diesem Fall ist die Lüfterhaube 2 statt der Ausführung aus Blech als Ausführung insbesondere aus Guss herstellbar, wobei der Guss vorzugsweise ein Aluminiumguss ist, woran dann ein Winkelsensor abstützbar ist. Bei Ausführung aus Guss darf dann also die Lüfterhaube den jeweiligen Nutabschnitt ganz ausfüllen und ist somit eingeklipst, also formschlüssig gehalten. Dabei liegt die Lüfterhaube beidseitig, insbesondere also radial innen und außen, an den Nutwänden der Nut an.

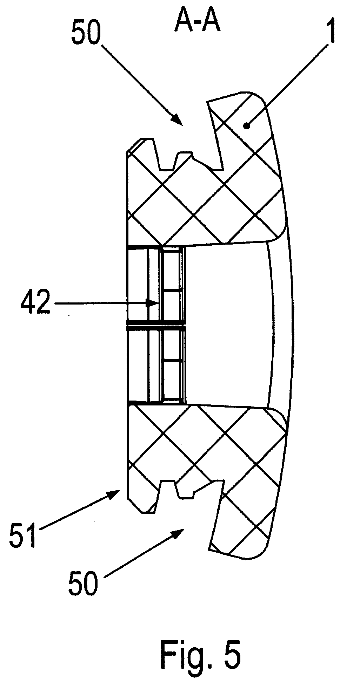

In Figur 5 ist der Querschnitt durch das Verschlussteil 1 gezeigt, wobei die Lüfterhaube 2 nicht dargestellt ist. Bei Aufstecken des Verschlussteils 1 auf die aus Blech ausgeführte Lüfterhaube 2 liegt diese an der Unterseite des plattenförmigen Bereichs an und ist in der tieferen der beiden Vertiefungen des Nutabschnitts 50 eingeklipst.

Bei der dünnwandigen Ausführung der Lüfterhaube 2, insbesondere also bei Verwendung von sehr dünnem Blech, wirkt eine Schrägung innerhalb der tieferen der beiden Vertiefungen derart, dass die Lüfterhaube beim Einklipsen zu dem plattenförmigen Bereich hinrutscht, also dann an der Unterseite des plattenförmigen Bereichs anliegt. Die in Umfangsrichtung tiefere Vertiefung der beiden Vertiefungen des Nutabschnitts 50 weist also sozusagen auch eine Einführschräge auf. Nach dem Einführen der Lüfterhaube in diese Vertiefung befindet sich die Lüfterhaube auf demjenigen Radialabstand, an welchem der Führungsbereich des Verschlussteils 1 im vom Nutabschnitt 50 überdeckten, axialen Bereich in Umfangsrichtung die geringste Ausdehnung aufweist.

Bei der dickeren Ausführung der Lüfterhaube 2, insbesondere also bei Verwendung von Guss als Material für die Lüfterhaube 2, liegt die Lüfterhaube 2 mit ihrer radial äußeren Oberfläche an der Unterseite des plattenförmigen Bereichs des Verschlussteils 1 an und mit ihrer radial inneren Oberfläche an der vom plattenförmigen Bereich abgewandten Nutwand des Nutabschnitts 50 an.

Der Querschnitt gemäß Figur 5 bezieht sich nur auf zwei der vier Nutabschnitte 50

Nach dem Einklipsen des Verschlussteils 1 in den Axialschlitz der Lüfterhaube fungieren die Nutabschnitte 50 insgesamt als axial gerichtete Führung für das Verschlussteil 1. Dabei weist der Axialschlitz vorzugsweise eine konstante Schlitzweite auf, insbesondere zumindest in demjenigen Bereich, in welchem eine Führung des Verschlussteils 1 stattfinden soll.

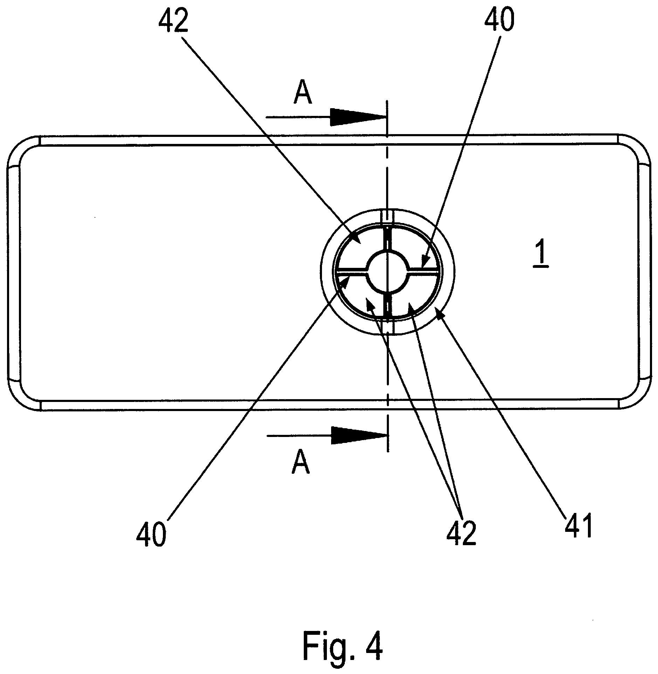

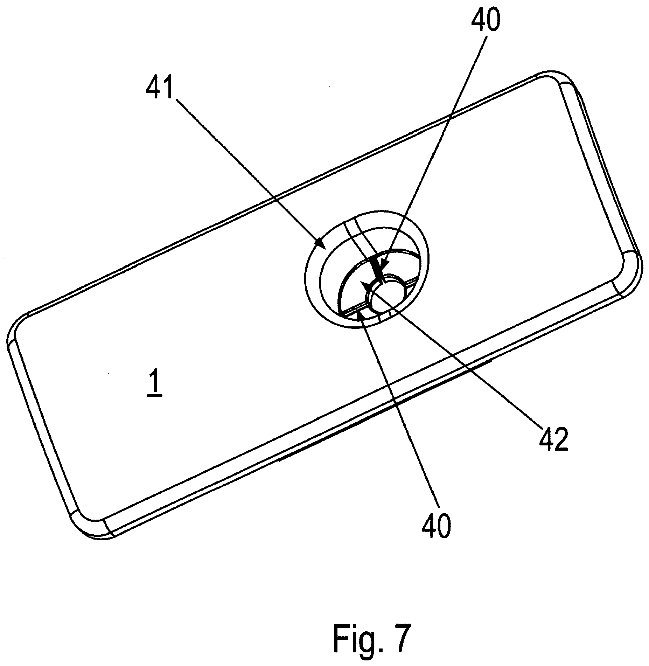

Wie in Figur 4 und Figur 7 gut sichtbar dargestellt, weist der plattenförmige Bereich des Verschlussteils eine Vertiefung 41 auf, innerhalb derer eine durch das Verschlussteil 1 durchgehende Ausnehmung angeordnet ist, welche mittig zwischen in der Vertiefung angeordneten Laschenbereichen 42 angeordnet ist. Dabei sind die Laschenbereiche 42 einstückig, also einteilig am Verschlussteil 1, insbesondere am plattenförmigen Bereich des Verschlussteils 1, ausgebildet, insbesondere angeformt.

Die Laschenbereiche 42 sind mittels Schlitzen in um die durchgehende Ausnehmung herum gerichteter Umfangsrichtung jeweils von ihrem in dieser Umfangsrichtung nächstbenachbarten Laschenbereich beabstandet.

Die Laschenbereiche 42 sind vorzugsweise gleichartig ausgeführt.

Jeder der Laschenbereiche 42 überdeckt denselben Radialabstandsbereich und denselben axialen Bereich von der Mitte der durchgehenden Ausnehmung gesehen.

Die Schlitze 40 sind vorzugsweise in Kreuzschlitzform angeordnet.

Die Stange 3 ist dicker ausgeführt als die durchgehende Ausnehmung. Insbesondere ist die Stange 3 im durchstoßenden Bereich als Rundteil, insbesondere also zylindrisch, ausgeführt und weist einen größeren Durchmesser auf als der lichte Durchmesser der durchgehenden Ausnehmung beträgt.

Somit werden die Laschenbereiche 42 beim Durchführen der Stange 3 durch die Vertiefung 41 elastisch ausgelenkt und liegen an der Stange 3 an. Somit ist das Verschlussteil 1 mittels der elastisch ausgelenkten und an die Stange 3 anliegenden und elastisch vorgespannt andrückenden Laschenbereiche 41 kraftschlüssig verbunden mit der Stange 3, so dass bei deren Schwenkbewegung das Verschlussteil 1 mitgenommen wird.

Bei Überlastung dieser kraftschlüssigen Verbindung besteht dann aber immer noch die formschlüssige Bindung der Stange 3, indem sie durch die durchgehende Ausnehmung des Verschlussteils 1 hindurchgeführt ist.

Die Elastizität der Laschenbereiche ist derart ausgelegt, dass die zum Durchstoßen der Vertiefung 41 mittels der Stange 3 notwendige Kraft größer ist als eine in der Norm festgelegte Kraft, mit welcher ein Prüffinger auf eine der Norm genügende Vorrichtung drücken darf. Somit ist eine hohe Sicherheit für Menschen gewährleistet. Denn somit kann der Prüffinger gemäß Norm nicht durch die Vertiefung 41 gelangen.

Die Stange 3 ist vorzugsweise schraubverbunden mit einem Gelenkteil des Drehgelenks der Bremse, welches die Schwenkbewegung ermöglicht.

### Bezugszeichenliste

1 Verschlussteil
2 Lüfterhaube
3 Stange, insbesondere Hebelstange
40 Schlitz, insbesondere Teilbereich eines Kreuzschlitzes
41 Vertiefung, insbesondere Ausnehmung
42 Laschenbereich
50 Nutabschnitt
51 Verbindungsbereich

## Patentansprüche

1. Antrieb, aufweisend einen Elektromotor mit Bremse, **einen Lüfter** und eine Lüfterhaube (2),
wobei die Lüfterhaube (2) **den Lüfter abdeckt und** mit einem Gehäuseteil, insbesondere mit einem Statorgehäuseteil, des Elektromotors lösbar verbunden ist,
**wobei** eine Stange (3) durch ein Verschlussteil (1) hindurchführbar ist, welches durch eine in der Lüfterhaube (2) angeordneten Ausnehmung, **nämlich** eine als Schlitz (40) ausgeführte Ausnehmung, hindurchragt,
**wobei die Stange (3) bewegbar an der Bremse angeordnet ist und die Stange (3), insbesondere die als Hebelteil ausgeführte Stange (3), zum manuellen Betätigen, insbesondere Lüften, der Bremse vorgesehen ist,**
**wobei das Verschlussteil (1) zur Lüfterhaube (2) relativ bewegbar angeordnet ist,**
**dadurch gekennzeichnet, dass**
**das Verschlussteil (1) einen plattenförmigen Bereich und einen mit dem plattenförmigen Bereich verbundenen Führungsbereich aufweist, an welchem in Umfangsrichtung voneinander beabstandete erste Nutabschnitte (50) ausgebildet sind,**
**wobei ein jeweiliger Randbereich des Schlitzes (40) der Lüfterhaube (2) in einen der Nutabschnitte (50) hineinragt.**

2. Antrieb nach Anspruch 1,
**dadurch gekennzeichnet, dass**
**das Verschlussteil (1) zusammen mit der Stange (3) bei deren Schwenkbewegung hinund herbewegbar ist.**

3. Antrieb nach Anspruch 1 oder 2,
**dadurch gekennzeichnet, dass**
das Verschlussteil (1) eingeklipst ist in die Lüfterhaube (2), insbesondere in den Schlitz (40) der Lüfterhaube (2),
insbesondere wobei das Verschlussteil (1) aus Gummi oder Kunststoff gefertigt ist.

4. Antrieb nach mindestens einem der vorangegangenen Ansprüche,
**dadurch gekennzeichnet, dass**
**der von der Ausnehmung in axialer Richtung überdeckte Bereich größer ist als der vom Führungsbereich überdeckte Bereich, wobei der vom plattenförmigen Bereich in axialer Richtung überdeckte Bereich größer ist als der von der Ausnehmung überdeckte Bereich.**

5. Antrieb nach mindestens einem der vorangegangenen Ansprüche,
**dadurch gekennzeichnet, dass**
am Führungsbereich zweite Nutabschnitte (50) ausgebildet sind, welche von den ersten Nutabschnitten (50) in axialer Richtung beabstandet sind.

6. Antrieb nach mindestens einem der vorangegangenen Ansprüche,
**dadurch gekennzeichnet, dass**
jeder der Nutabschnitte (50) zwei, in Umfangsrichtung voneinander beabstandete Vertiefungen aufweist.

7. Antrieb nach mindestens einem der vorangegangenen Ansprüche,
**dadurch gekennzeichnet, dass** die dem plattenförmigen Bereich zugewandte Vertiefung (41) des jeweiligen Nutbereiches eine Einführschräge, insbesondere eine zum plattenförmigen Bereich hin gerichtete Einführschräge, aufweist.

8. Antrieb nach mindestens einem der vorangegangenen Ansprüche,
**dadurch gekennzeichnet, dass**
die Lüfterhaube (2) in der dem plattenförmigen Bereich zugewandten Vertiefung (41) des jeweiligen Nutbereiches angeordnet ist
und/oder dass die Lüfterhaube (2) an einem radial inneren Oberflächenbereich des plattenförmigen Bereichs anliegt,
wobei die andere Vertiefung (41) des jeweiligen Nutbereichs von der Lüfterhaube (2) beabstandet ist.

9. Antrieb nach mindestens einem der vorangegangenen Ansprüche,
**dadurch gekennzeichnet, dass**
der Führungsbereich des Verschlussteils (1) durch den in der Lüfterhaube (2) angeordneten Schlitz (40) hindurchragt
und/oder der plattenförmige Bereich auf dem, insbesondere radial, äußeren Oberflächenbereich **der Lüfterhaube (2)** aufliegt.

10. Antrieb nach mindestens einem der vorangegangenen Ansprüche,
**dadurch gekennzeichnet, dass**
im Verschlussteil (1) eine Vertiefung (41) angeordnet ist, in welcher, insbesondere mittig, eine durch das Verschlussteil (1), **insbesondere eine durch den plattenförmigen Bereich und durch den Führungsbereich,** radial durchgehende Ausnehmung angeordnet ist.

11. Antrieb nach mindestens einem der vorangegangenen Ansprüche,
**dadurch gekennzeichnet, dass**
innerhalb der Vertiefung (41) Laschenbereiche (42) angeordnet sind, welche mit dem Verschlussteil (1), insbesondere mit dem Führungsbereich des Verschlussteils (1), einstückig, insbesondere einteilig, ausgeformt sind.

12. Antrieb nach mindestens einem der vorangegangenen Ansprüche,
**dadurch gekennzeichnet, dass**
die Laschenbereiche (42) elastisch ausgelenkt, verformt und/oder gespannt gegen die Stange (3) drücken, insbesondere zur Abdichtung,
und/oder dass
die Laschenbereiche (42) voneinander regelmäßig beabstandet sind, insbesondere mittels Schlitzen.

13. Antrieb nach mindestens einem der vorangegangenen Ansprüche,
**dadurch gekennzeichnet, dass**
die Vertiefung (41) zylindrisch ausgeformt ist,
wobei die Laschenbereiche (42) in Umfangsrichtung um die Zylinderachse der Vertiefung (41) jeweils denselben Umfangswinkelbetrag überdecken und regelmäßig voneinander beabstandet sind,
wobei die Laschenbereiche (42) jeweils denselben, auf die Zylinderachse bezogenen Radialabstandsbereich überdecken und
wobei die Laschenbereiche (42) jeweils denselben axialen Bereich überdecken,
insbesondere wobei bezogen auf die Zylinderachse in Umfangsrichtung zwischen den Laschenbereichen (42) jeweils ein Schlitz (40) ausgeführt ist, welcher sich vom Führungsbereich nach bezogen auf die Zylinderachse radial bis zur durchgehenden Ausnehmung erstreckt,
**und/oder dass**
der zum Erreichen der elastischen Auslenkung der Laschenbereiche (42) notwendige, insbesondere durch die Stange (3) beim Durchstoßen der Vertiefung (41) aufzubringende Kraftbetrag größer ist als der von einem Prüffinger gemäß Norm maximal aufbringbare Kraftbetrag,
**und/oder dass**
die durchgehende Ausnehmung bezogen auf die Zylinderachse radial innerhalb des von den Laschenbereichen (42) überdeckten Radialabstandsbereich angeordnet ist,
**und/oder dass**
**die Stange (3) schwenkbar an der Bremse angeordnet ist.**

14. Verfahren zum Herstellen eines Antriebs **nach mindestens einem der vorangegangenen Ansprüche,**
wobei der Antrieb einen Elektromotor mit Bremse, Lüfterhaube (2) und Stange (3), insbesondere Hebelteil, zum manuellen Betätigen, insbesondere Lüften, der Bremse aufweist,
wobei die Lüfterhaube (2) mit einem Gehäuseteil, insbesondere mit einem Statorgehäuseteil des Elektromotors, lösbar verbunden wird,
wobei die Stange (3) bewegbar angeordnet ist,
**dadurch gekennzeichnet, dass**
die Stange (3) durch ein Verschlussteil (1) hindurchgeführt wird, welches durch einen in der Lüfterhaube (2) angeordneten Schlitz (40) hindurchragt,
wobei als Lüfterhaube (2) wahlweise eine erste oder zweite Lüfterhaube (2) verwendet wird, wobei die Wandstärke der ersten Lüfterhaube (2) kleiner ist als die Wandstärke der zweiten Lüfterhaube,
wobei das Verschlussteil (1) einen Nutabschnitt (50) aufweist, deren Nutweite der Wandstärke der zweiten Lüfterhaube gleicht,
insbesondere wobei der Nutabschnitt (50) zwei radial voneinander beabstandete Vertiefungen aufweist, wobei die erste Lüfterhaube (2) nur in einer der beiden Vertiefungen angeordnet ist, also von der anderen der beiden Vertiefungen beabstandet ist und wobei die zweite Lüfterhaube beide Vertiefungen füllt und/oder überdeckt.
insbesondere wobei die erste Lüfterhaube (2) aus Metallblech, insbesondere Stahlblech, und die zweite Lüfterhaube aus Metallguss gefertigt ist.

## Claims

1. A drive, having an electric motor with brake, a fan and a fan cowl (2),
wherein the fan cowl (2) covers over the fan and is detachably connected to a housing part, in particular to a stator housing part, of the electric motor,
wherein a rod (3) can be passed through a closure part (1) which protrudes through a cutout arranged in the fan cowl (2), namely a cutout embodied as a slot (40),
wherein the rod (3) is arranged movably on the brake, and the rod (3), in particular the rod (3) which is embodied as a lever part, is provided for manually actuating, in particular releasing, the brake,
wherein the closure part (1) is arranged movably in relation to the fan cowl (2),
**characterised in that**
the closure part (1) has a plate-shaped region and a guide region connected to the plate-shaped region, on which guide region first groove portions (50) spaced apart from each other in the peripheral direction are formed,
with a respective edge region of the slot (40) of the fan cowl (2) protruding into one of the groove portions (50).

2. A drive according to claim 1,
**characterised in that**
the closure part (1) together with the rod (3) can be moved back and forth upon the pivoting movement of the latter.

3. A drive according to claim 1 or 2,
**characterised in that**
the closure part (1) is snapped into the fan cowl (2), in particular into the slot (40) of the fan cowl (2),
in particular with the closure part (1) being manufactured from rubber or plastics material.

4. A drive according to at least one of the preceding claims,
**characterised in that**
the region covered by the cutout in the axial direction is larger than the region covered by the guide region, with the region covered by the plate-shaped region in the axial direction being larger than the region covered by the cutout.

5. A drive according to at least one of the preceding claims,
**characterised in that**
on the guide region there are formed second groove portions (50) which are spaced apart in the axial direction from the first groove portions (50).

6. A drive according to at least one of the preceding claims,
**characterised in that**
each of the groove portions (50) has two indentations spaced apart from each other in the peripheral direction.

7. A drive according to at least one of the preceding claims,
**characterised in that** the indentation (41) of the respective groove region which faces the plate-shaped region has a lead-in slope, in particular a lead-in slope directed towards the plate-shaped region.

8. A drive according to at least one of the preceding claims,
**characterised in that**
the fan cowl (2) is arranged in the indentation (41) of the respective groove region which faces the plate-shaped region,
and/or **in that** the fan cowl (2) lies against a radially inner surface region of the plate-shaped region,
with the other indentation (41) of the respective groove region being spaced apart from the fan cowl (2).

9. A drive according to at least one of the preceding claims,
**characterised in that**
the guide region of the closure part (1) protrudes through the slot (40) arranged in the fan cowl (2)
and/or the plate-shaped region lies on the, in particular radially, outer surface region of the fan cowl (2).

10. A drive according to at least one of the preceding claims,
**characterised in that**
in the closure part (1) there is arranged an indentation (41) in which, in particular centrally, a cutout which passes radially through the closure part (1), in particular through the plate-shaped region and through the guide region, is arranged.

11. A drive according to at least one of the preceding claims,
**characterised in that**
within the indentation (41) there are arranged tab regions (42) which are formed in one piece, in particular in one part, with the closure part (1), in particular with the guide region of the closure part (1).

12. A drive according to at least one of the preceding claims,
**characterised in that**
the tab regions (42) press, elastically deflected, deformed and/or tensioned, against the rod (3), in particular for sealing purposes,
and/or **in that**
the tab regions (42) are regularly spaced apart from each other, in particular by means of slots.

13. A drive according to at least one of the preceding claims,
**characterised in that**
the indentation (41) is formed cylindrically,
with the tab regions (42) in the peripheral direction about the cylinder axis of the indentation (41) in each case covering the same angle-at-circumference amount and being regularly spaced apart from each other,
with the tab regions (42) in each case covering the same radial distance region which is relative to the cylinder axis, and
with the tab regions (42) in each case covering the same axial region,
in particular with, relative to the cylinder axis, in the peripheral direction is each case a slot (40) being embodied between the tab regions (42) which extends from the guide region to, relative to the cylinder axis, radially up to the uninterrupted cutout,
and/or **in that**
the amount of force necessary for achieving the elastic deflection of the tab regions (42), in particular to be applied by the rod (3) upon penetrating the indentation (41), is greater than the maximum amount of force which can be applied by a test finger as per standard,
and/or **in that**
the uninterrupted cutout, relative to the cylinder axis, is arranged radially within the radial distance region covered by the tab regions (42),
and/or **in that**
the rod (3) is arranged pivotably on the brake.

14. A method for producing a drive according to at least one of the preceding claims,
wherein the drive has an electric motor with brake, a fan cowl (2) and a rod (3), in particular lever part, for manually actuating, in particular releasing, the brake,
wherein the fan cowl (2) is detachably connected to a housing part, in particular to a stator housing part of the electric motor,
wherein the rod (3) is arranged movably,
**characterised in that**
the rod (3) is passed through a closure part (1) which protrudes through a slot (40) arranged in the fan cowl (2),
with either a first or a second fan cowl (2) being used as fan cowl (2), with the wall thickness of the first fan cowl (2) being less than the wall thickness of the second fan cowl,
with the closure part (1) having a groove portion (50), the groove width of which is the same as the wall thickness of the second fan cowl,
in particular with the groove portion (50) having two indentations radially spaced apart from each other, with the first fan cowl (2) being arranged only in one of the two indentations, i.e. being spaced apart from the other of the two indentations, and with the second fan cowl filling and/or covering both indentations,
in particular with the first fan cowl (2) being manufactured from metal sheet, in particular steel sheet, and the second fan cowl from cast metal.

## Revendications

1. Entraînement, comprenant un moteur électrique avec frein, un ventilateur et un capot de ventilateur (2),
le capot de ventilateur (2) recouvrant le ventilateur et étant relié de manière amovible à un élément de boîtier, en particulier à un élément de boîtier de stator, du moteur électrique,
une tige (3) pouvant être introduite à travers une pièce de fermeture (1), laquelle traverse un évidement disposé dans le capot de ventilateur (2), à savoir un évidement réalisé sous forme de fente (40),
la tige (3) étant disposée de manière mobile au niveau du frein et la tige (3), en particulier la tige (3) réalisée comme élément de levier, étant prévue pour l'actionnement manuel, en particulier le déverrouillage, du frein,
la pièce de fermeture (1) étant disposée de manière mobile relativement au capot de ventilateur (2),
**caractérisé en ce que**
la pièce de fermeture (1) présente une zone en forme de plaque et une zone de guidage reliée à la zone en forme de plaque, sur laquelle sont formées des premières sections de rainure (50) espacées les unes des autres en direction circonférentielle,
une zone de bord respective de la fente (40) du capot de ventilateur (2) s'étendant dans l'une des sections de rainure (50).

2. Entraînement selon la revendication 1, **caractérisé en ce que** la pièce de fermeture (1) est déplaçable d'avant en arrière avec la tige (3) lors de son mouvement de pivotement.

3. Entraînement selon la revendication 1 ou 2, **caractérisé en ce que** la pièce de fermeture (1) est clipsée dans le capot de ventilateur (2), en particulier dans la fente (40) du capot de ventilateur (2), en particulier la pièce de fermeture (1) étant fabriquée en caoutchouc ou en matière plastique.

4. Entraînement selon au moins l'une des revendications précédentes, **caractérisé en ce que** la zone recouverte par l'évidement en direction axiale est plus grande que la zone recouverte par la zone de guidage, la zone recouverte par la zone en forme de plaque en direction axiale étant plus grande que la zone recouverte par l'évidement.

5. Entraînement selon au moins l'une des revendications précédentes, **caractérisé en ce que** des deuxièmes sections de rainure (50) sont formées sur la zone de guidage, lesquelles sont espacées des premières sections de rainure (50) en direction axiale.

6. Entraînement selon au moins l'une des revendications précédentes, **caractérisé en ce que** chacune des sections de rainure (50) présente deux cavités espacées l'une de l'autre en direction circonférentielle.

7. Entraînement selon au moins l'une des revendications précédentes, **caractérisé en ce que** la cavité (41) de chaque zone de rainure, orientée vers la zone en forme de plaque, présente un chanfrein d'introduction, en particulier un chanfrein d'introduction dirigé vers la zone en forme de plaque.

8. Entraînement selon au moins l'une des revendications précédentes, **caractérisé en ce que** le capot de ventilateur (2) est disposé dans la cavité (41) de chaque zone de rainure orientée vers la zone en forme de plaque,
et/ou **en ce que** le capot de ventilateur (2) repose sur une zone de surface radiale interne de la zone en forme de plaque,
la seconde cavité (41) de chaque zone de rainure étant espacée du capot de ventilateur (2).

9. Entraînement selon au moins l'une des revendications précédentes, **caractérisé en ce que** la zone de guidage de la pièce de fermeture (1) traverse la fente (40) disposée dans le capot de ventilateur (2)
et/ou la zone en forme de plaque repose sur la zone de surface, en particulier radiale, externe du capot de ventilateur (2).

10. Entraînement selon au moins l'une des revendications précédentes, **caractérisé en ce qu'**une cavité (41) est disposée dans la pièce de fermeture (1), dans laquelle, en particulier au centre, un évidement traversant radial à travers la pièce de fermeture (1), en particulier à travers la zone en forme de plaque et à travers la zone de guidage, est disposé.

11. Entraînement selon au moins l'une des revendications précédentes, **caractérisé en ce que** des zones de languette (42) sont disposées à l'intérieur de la cavité (41), lesquelles sont formées d'une seule pièce, en particulier formées en une seule pièce avec la pièce de fermeture (1), en particulier avec la zone de guidage de la pièce de fermeture (1).

12. Entraînement selon au moins l'une des revendications précédentes, **caractérisé en ce que** les zones de languette (42) sont déviées de façon élastique, déformées et/ou tendues contre la tige (3), en particulier pour l'étanchéité,
et/ou **en ce que**
les zones de languette (42) sont espacées régulièrement les unes des autres, en particulier au moyen de fentes.

13. Entraînement selon au moins l'une des revendications précédentes, **caractérisé en ce que** la cavité (41) est de forme cylindrique,
les zones de languette (42) recouvrant en direction circonférentielle autour de l'axe du cylindre de la cavité (41) chacune la même valeur angulaire circonférentielle et étant espacées régulièrement les unes des autres,
les zones de languette (42) recouvrant chacune la même zone d'espacement radial par rapport à l'axe du cylindre,
et les zones de languette (42) recouvrant chacune la même zone axiale,
en particulier, par rapport à l'axe du cylindre, une fente (40) étant réalisée en direction circonférentielle entre les zones de languette (42), laquelle s'étend de la zone de guidage, par rapport à l'axe du cylindre, radialement jusqu'à l'évidement traversant,
et/ou **en ce que**
la valeur de force nécessaire pour atteindre la déviation élastique des zones de languette (42), en particulier à appliquer par la tige (3) lors de la traversée de la cavité (41), est supérieure à la valeur de force maximale pouvant être appliquée par un doigt d'essai selon la norme,
et/ou **en ce que**
l'évidement traversant est disposé, par rapport à l'axe du cylindre, radialement à l'intérieur de la zone d'espacement radial recouverte par les zones de languette (42),
et/ou **en ce que**
la tige (3) est disposée pivotante au niveau du frein.

14. Procédé pour fabriquer un entraînement selon au moins l'une des revendications précédentes, l'entraînement comprenant un moteur électrique avec frein, un capot de ventilateur (2) et une tige (3), en particulier un élément de levier, pour l'actionnement manuel, en particulier le déverrouillage, du frein,
le capot de ventilateur (2) étant relié de manière amovible à un élément de boîtier, en particulier à un élément de boîtier de stator du moteur électrique,
la tige (3) étant disposée de manière mobile,
**caractérisé en ce que**
la tige (3) est introduite à travers une pièce de fermeture (1), laquelle traverse une fente (40) disposée dans le capot de ventilateur (2),
le capot de ventilateur (2) étant, au choix, un premier ou un second capot de ventilateur (2), l'épaisseur de paroi du premier capot de ventilateur (2) étant inférieure à l'épaisseur de paroi du second capot de ventilateur,
la pièce de fermeture (1) présentant une section de rainure (50), dont la largeur de rainure est égale à l'épaisseur de paroi du second capot de ventilateur,
en particulier la section de rainure (50) présentant deux cavités espacées radialement l'une de l'autre,
le premier capot de ventilateur (2) étant disposé uniquement dans l'une des deux cavités, donc espacée de l'autre des deux cavités, et le second capot de ventilateur remplissant et/ou recouvrant les deux cavités.
en particulier le premier capot de ventilateur (2) étant fabriqué en tôle métallique, en particulier en tôle d'acier, et le second capot de ventilateur étant fabriqué en métal coulé.
